(19) Europäisches Patentamt
European Patent Office
Office européen des brevets

(11) Veröffentlichungsnummer : **0 346 669 B1**

(12) # EUROPÄISCHE PATENTSCHRIFT

(45) Veröffentlichungstag der Patentschrift : **30.09.92 Patentblatt 92/40**

(51) Int. Cl.$^5$ : **C08L 35/00,** C08K 5/35, C09D 133/14

(21) Anmeldenummer : **89109606.7**

(22) Anmeldetag : **27.05.89**

(54) **Verfahren zur Herstellung von härtbaren Bindemittelkombinationen, die nach diesem Verfahren erhältlichen Kombinationen und ihre Verwendung.**

(30) Priorität : **11.06.88 DE 3819942**

(43) Veröffentlichungstag der Anmeldung : **20.12.89 Patentblatt 89/51**

(45) Bekanntmachung des Hinweises auf die Patenterteilung : **30.09.92 Patentblatt 92/40**

(84) Benannte Vertragsstaaten : **AT BE CH DE ES FR GB IT LI NL SE**

(56) Entgegenhaltungen : **US-A- 4 539 376**

(73) Patentinhaber : **BAYER AG**
**W-5090 Leverkusen 1 Bayerwerk (DE)**

(72) Erfinder : **Blum, Harald, Dr.**
**Auf dem Westkamp 1**
**W-4175 Wachtenkonk 1 (DE)**
Erfinder : **Wamprecht, Christian, Dr.**
**Bahnhofstrasse 51**
**W-4040 Neuss 22 (DE)**
Erfinder : **Pedain, Josef, Dr.**
**Haferkamp 6**
**W-5000 Koeln 80 (DE)**
Erfinder : **Sonntag, Michael, Dr.**
**Gartenstrasse 27a**
**W-5068 Odenthal (DE)**



Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die vorliegende Erfindung betrifft ein Verfahren zur Herstellung von gegebenenfalls unter dem Einfluß von Feuchtigkeit aushärtbaren Bindemittelkombinationen, bestehend im wesentlichen aus Epoxidgruppen aufweisenden Maleinsäure-Copolymerisaten und bicyclische Amidacetale bzw. bicyclische Amidaminale enthaltende Verbindungen, die nach diesem Verfahren erhaltenen Kombinationen und ihre Verwendung als unter dem Einfluß von Feuchtigkeit aushärtbare Lacke oder Beschichtungsmassen oder zur Herstellung derartiger Lacke oder Beschichtungsmassen.

Die Verwendung von Kombinationen aus organischen Verbindungen mit mindestens zwei intramolekularen Carbonsäureanhydridgruppen pro Molekül, insbesondere von bernsteinsäureanhydridhaltigen Copolymerisaten und Polyhydroxylverbindungen als Bindemittel für Lacke und Beschichtungsmassen ist aus der EP-A-48 128 bereits bekannt. Der Gedanke, das Prinzip dieser Vorveröffentlichung auf die Umsetzung von Aminen mit Anhydriden zu übertragen, scheitert jedoch an der Tatsache, daß die Umsetzung von Aminen mit Anhydriden eine bereits bei Raumtemperatur sehr rasch ablaufende Reaktion darstellt, die unter Anhydridspaltung zu vernetzten Produkten führt. Die daraus resultierenden extrem kurzen Standzeiten verhindern bisher die gemeinsame Verwendung von Polyanhydriden und Polyaminen in Beschichtungssystemen.

Eine Lösungsmöglichkeit wird in der DE-OS 2 853 477 aufgezeigt. Dort werden Mischungen aus blockierten Polyaminen und aus Polyanhydriden beschrieben, die gute Standzeiten aufweisen, jedoch bei Zugabe von Wasser zu vernetzten Produkten aushärten. Als geeignete blockierte Polyamine werden Ketimine bzw. Aldimine beschrieben, die durch Umsetzung von Polyaminen mit Ketonen bzw. Aldehyden erhalten werden.

Als Polyanhydride werden Verbindungen mit wenigstens 2 cyclischen Carbonsäureanhydridgruppen im Molekül, insbesondere Umsetzungsprodukte von Polyolen mit cyclischen Dianhydriden bei einem Hydroxyl-/Anhydridgruppenverhältnis von 1:2, oder Copolymerisate eines ungesättigten cyclischen Anhydrids mit mehrfach ungesättigten Verbindungen oder $\alpha$-Olefinen genannt.

Die bei der Herstellung der Copolymerisate einzusetzenden olefinisch ungesättigten Verbindungen werden in der allgemeinen Beschreibung der DE-OS 2 853 477 nur sehr pauschal abgehandelt, insbesondere fehlt jeglicher Hinweis bezüglich der Mengenverhältnisse der einzelnen Monomeren, die bei der Herstellung der Copolymerisate zum Einsatz gelangen sollen. Die konkrete Offenbarung der Ausführungsbeispiele beschränkt sich auf Copolymerisate aus Butadienöl und Maleinsäureanhydrid im Verhältnis 1:1 und auf Copolymerisate von Holzöl mit Maleinsäureanhydrid. Diese Copolymerisate sind jedoch mit Nachteilen behaftet, da ihre Kombination mit Bisketiminen bzw. Bisaldiminen letztendlich zu stark verfärbten Produkten führt. Im übrigen führen Beschichtungsmittel, die als Bindemittelkomponente ungesättigte Öle wie Butadienöl oder Holzöl enthalten zu Überzügen, die leicht zur Versprödung neigen und nicht wetterbeständig sind.

Außerdem muß, wie den Ausführungsbeispielen der DE-OS 2 853 477 zu entnehmen, bei der Verarbeitung der dort konkret beschriebenen Bindemittel Dimethylformamid als Lösungsmittel eingesetzt werden, wobei außerdem nicht akzeptable Feststoffgehalte von lediglich ca. 20 % zur Anwendung gelangen.

Eine weitere Möglichkeit, die Standzeiten zu verlängern besteht in der Verwendung von Oxazolanen anstelle der Amine.

Wasserhärtbare Zusammensetzungen aus Oxazolanen und Polyanhydriden sind im Prinzip aus der DE-OS 2 610 406 bekannt. Dort werden Oxazolane mit Polyanhydriden für wasserhärtbare Dicht- und Klebstoffmassen kombiniert.

Als geeignete Polyanhydride werden Umsetzungsprodukte von mehrfach ungesättigten Fettsäuren mit Maleinsäureanhydrid und Polyanhydride aus $C_3$-$C_6$-Alkyl-(meth)acrylat und Maleinsäureanhydrid, insbesondere aus Butylacrylat und Maleinsäureanhydrid beschrieben.

Wie eigene Versuche der Anmelderin zeigten, sind die in der DE-OS 2 610 406 konkret beschriebenen Systeme bezüglich ihrer Eignung zur Herstellung hochwertiger, farbloser Lackfilme hoher Härte und guter Lösungsmittel- und Chemikalienbeständigkeit noch stark verbesserungsbedürftig. Dies gilt sowohl für die in den Ausführungsbeispielen beschriebenen Systeme auf Basis von Copolymerisaten aus Maleinsäureanhydrid und Butylacrylat als auch für die Systeme auf Basis von Umsetzungsprodukten von Maleinsäureanhydrid mit mehrfach ungesättigten Fettsäureestern, die zu vergilbenden Endprodukten führen.

Es war daher die der Erfindung zugrundeliegende Aufgabe, neue Bindemittelkombinationen auf Basis von Polyanhydriden und modifizierten Polyaminen zur Verfügung zu stellen, die zur Herstellung von hochwertigen, gegebenenfalls unter dem Einfluß von Luftfeuchtigkeit, aushärtbaren Systemen geeignet sind, wobei die Bindemittelsysteme eine ausreichende Topfzeit aufweisen müssen und in vertretbaren Zeiträumen zu klaren, lösungsmittelfesten Filmen ausgehärtet werden können.

Diese Aufgabe konnte durch die Bereitstellung des nachstehend näher beschriebenen erfindungsgemäßen Verfahrens gelöst werden, bei welchem eine Kombination von Anhydrid- und Epoxidgruppen aufweisenden Copolymerisaten der nachstehend näher beschriebenen Art mit bicyclischen Amidacetal-

oder bicyclischen Amidaminalgruppen aufweisenden Verbindungen der nachstehend näher beschriebenen Art erfolgt.

Die US-PS 4 539 376 beschreibt bereits die Umsetzung von Maleinsäureanhydridgruppen aufweisenden Copolymerisaten mit bicyclischen Amidacetalen, wobei, wie den Ausführungsbeispielen zu entnehmen, vorzugsweise Copolymerisate eines über 100 000 liegenden Molekulargewichts zur Anwendung gelangen. Die Verwendung von vergleichsweise niedermolekularen Copolymerisaten, die neben Maleinsäureanhydridgruppen auch noch Epoxidgruppen aufweisen kann dieser Veröffentlichung nicht entnommen werden.

Gegenstand der Erfindung ist ein Verfahren von feuchtigkeitshärtenden Bindemittelkompositionen durch Abmischung und gegebenenfalls Umsetzung unter Feuchtigkeitsausschluß von

A) 30 bis 99 Gew.-Teilen mindestens einer Verbindung, welche mindestens zwei intramolekulare Carbonsäureanhydridgruppen enthält,

mit

B) 1 bis 70 Gew.-Teilen an organischen Verbindungen mit blockierten Aminogruppen,

gegebenenfalls unter Mitverwendung von Lösungsmitteln und/oder sonstigen aus der Lacktechnologie bekannten Hilfs- und Zusatzstoffen, dadurch gekennzeichnet, daß man als Verbindungen A) Copolymerisate eines als Gewichtsmittel bestimmten Molekulargewichts von 1500 bis 75000 verwendet, die ein Epoxid-Äquivalentgewicht von 568 bis 14200 und ein Anhydrid-Äquivalentgewicht von 392 bis 9800 aufweisen und durch radikalisch initiierte Copoloymerisation von

a) 1 bis 20 Gew.-Teilen Maleinsäureanhydrid,

b) 1 bis 20 Gew.-Teilen copolymerisierbaren, epoxidfunktionellen Monomeren, sowie

c) 40 bis 98 Gew.-Teilen sonstigen copolymerisierbaren Monomeren der allgemeinen Formeln (I), (II), (III)

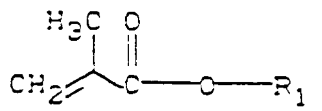

(I)

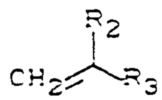

(II)

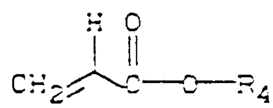

(III)

erhalten werden, wobei

$R_1$ für einen aliphatischen oder cycloaliphatischen, gegebenenfalls Sauerstoff, Schwefel oder Stickstoff als Heteroatom enthaltenden Kohlenwasserstoffrest mit 1 bis 18 Kohlenstoffatomen steht,

$R_2$ für Wasserstoff, eine Methyl- oder Ethylgruppe oder für Chlor oder Fluor steht,

$R_3$ für einen aliphatischen Kohlenwasserstoffrest mit 2 bis 15 Kolhenstoffatomen, einen cycloaliphatischen Kohlenwasserstoffrest mit 5 bis 10 Kohlenstoffatomen, einen araliphatischen Kohlenwasserstoffrest mit 7 bis 18 Kohlenstoffatomen, einen aromatischen Kohlenwasserstoffrest mit 6 bis 12 Kohlenstoffatomen, der ein oder mehrere Heteroatome aus der Gruppe bestehend aus Sauerstoff, Schwefel und Stickstoff in Form von Ether-, Ester-, Amid-, Urethan-, Harnstoff-, Thioester-, Thioether-, Oxiran-, Keton-, Lactam- oder Lactongruppen enthält, steht und

$R_4$ bezüglich seiner Bedeutung der für $R_1$ gemachten Definition entspricht, und als Verbindungen B) gegebenenfalls gegenüber Säureanhydridgruppen reaktionsfähige Wasserstoffatome aufweisende, im statistischen Mittel, gegebenenfalls neben anderen blockierten Aminogruppen, pro Molekül mindestens 0,1 bicyclische Amidacetal- und/oder bicyclische Amidaminalgruppen aufweisende organische Verbindungen eines als Gewichtsmittel bestimmten Molekulargewichts von 115 bis 30000 verwendet, wobei die Mengenverhältnisse der Einzelkomponenten unter Einbeziehung der gegebenenfalls in Abwesenheit von Feuchtigkeit zwischen den Komponenten A) und B) spontan ablaufenden Additionsreaktion so gewählt werden, daß in der resultierenden Komposition auf jede bicyclische Amidacetal- und/oder bicyclische Amidaminalgruppe 0,25 bis 50 Anhydridgruppen entfallen.

Gegenstand der Erfindung sind auch die nach diesem Verfahren erhältlichen Bindemittelkombinationen.

Gegenstand der Erfindung ist schließlich auch die Verwendung der nach dem erfindungsgemäßen Verfahren erhältlichen Bindemittelkombinationen als unter Einfluß von Feuchtigkeit aushärtbare Lacke oder Beschichtungsmassen oder zur Herstellung derartiger Lacke oder Beschichtungsmassen.

Bei der beim erfindungsgemäßen Verfahren einzusetzenden Ausgangskomponente A) handelt es sich um Maleinsäureanhydridcopolymerisate, die zusätzlich eingebaute Epoxidgruppen enthalten.

Der besondere Vorteil solcher Copolymerisate liegt darin, daß diese Bindemittelkombinationen nach einem "double-cure" Mechanismus aushärten können. Zunächst reagieren Anhydridgruppen und Epoxidgruppen mit den aminofunktionellen Vernetzern, anschließend können die bei der Reaktion von Anhydrid und Amin resultierenden Carboxylgruppen mit überschüssigen Epoxidgruppen abreagieren, so daß die Zahl der freien Carboxylgruppen im Überzug reduziert wird, gleichzeitig hohe Vernetzungsdichten erzielt werden und somit auch sehr hohe Anforderungen bezüglich Lösemittel- und Chemikalienfestigkeit erfüllt werden können.

Solche Copolymerisate A) bestehen somit aus mindestens einem Copolymerisat, welches sowohl Epoxidgruppen als auch intramolekulare Säureanhydridgruppen in copolymerisierter Form aufweist, wobei das als Gewichtsmittel nach der Methode der Gelpermeationschromatographie bestimmte Molekulargewicht dieser Copolymerisate bei 1500 bis 75 000, vorzugsweise 3000 bis 50 000 und besonders bevorzugt bei 3000 bis 25 000, liegt. Das Epoxidäquivalentgewicht (= Menge in "g", die 1 Mol Epoxidgruppen enthält) liegt bei 568 bis 14 200, vorzugsweise 973 bis 7300 und das Anhydridäquivalentgewicht (= Menge in "g", die 1 Mol Anhydridgruppen enthält) liegt bei 392 bis 9800, vorzugsweise 817 bis 3270.

Zur Herstellung dieser Epoxid- und Anhydridgruppen enthaltenden Copolymerisate wird ein Monomerengemisch der oben angegebenen Zusammensetzung verwendet.

Typische Beispiele für Monomere b) sind z.B. Glycidylacrylat oder Glycidylmethacrylat.

Typische Beispiele für Monomere c) sind Styrol, Vinylacetat, Methylmethacrylat, n-Butylacrylat, n-Butylmethacrylat, 2-Ethylhexylacrylat, Ethylacrylat, 2-Ethylhexylmethacrylat, Laurylmethacrylat.

Die Copolymerisate werden in an sich bekannter Weise durch eine radikalisch initiierte Copolymerisation, vorzugsweise in Anwesenheit von organischen Lösungsmitteln bei 60 bis 180°C hergestellt. Als Polymerisationsmedium sind sämtliche in der Lackindustrie gebräuchlichen Lösungsmittel geeignet, die unter den Polymerisationsbedingungen gegenüber den Monomeren und den Copolymerisaten inert sind.

Geeignet sind beispielsweise Ester wie Ethylacetat, Propylacetat, Butylacetat, Isopropylacetat, Isobutylacetat, sec.-Butylacetat, Amylacetat, Hexylacetat, Benzylacetat, Ethylpropionat, Butylpropionat, Methylglykolacetat, Ethylglykolacetat, Butylglykolacetat, Ethyldiglykolacetat, Ethylglykolacetat, Methyldiglykolacetat, Butyldiglykolacetat, Butyrolacton, Propylenglykolmethyletheracetat, z.B. Ether wie Diisopropylether, Dibutylether, Tetrahydrofuran, Dioxan, Dimethyldiglykol, Kohlenwasserstoffe wie Benzin, Terpentinöl, Solventnaphtha, Terpene, Hexan, Heptan, Octan, Cyclohexan, Toluol, Xylol, Ethylbenzol, Ketone wie Aceton, Methylethylketon, Methylisobutylketon, Methyl-n-amylketon, Methylisoamylketon, Diethylketon, Ethylbutylketon, Diisopropylketon, Cyclohexanon, Methylcyclohexanon, Isophoron oder beliebige Gemische derartiger Lösungsmittel.

Die Copolymerisation wird üblicherweise bei Feststoffgehalten von 30 bis 95 Gew.-% durchgeführt.

Im allgemeinen wird ein Teil oder die Gesamtmenge an Lösungsmittel im Reaktionsgefäß vorgelegt und Monomerenmischung, Initiator und gegebenenfalls ein Teil des Lösungsmittels kontinuierlich zudosiert. Nach beendeter Zugabe wird noch einige Zeit nachgerührt. Die Polymerisation wird nach einem Monomerenumsatz von mehr als 96 % bevorzugt mehr als 99 % beendet. Gegebenenfalls ist es erforderlich, durch nachträgliche Zugabe von geringen Initiatormengen eine Nachaktivierung vorzunehmen, um den gewünschten Monomerenumsatz zu erreichen. Bei bestimmten Monomerausgangszusammensetzungen ist es möglich, daß nach der Polymerisation größere Mengen an Maleinsäureanhydridrestmonomeren im Copolymerisat enthalten sind. Als Kostengründen und für den Fall, daß sich dies auf den gewünschten Anwendungszweck, bzw. auf das Eigenschaftniveau störend auswirken sollte, ist es vorteilhaft, diesen Restmonomerengehalt entweder durch Destillation oder durch Nachaktivieren mit Initiator, gegebenenfalls unter gleichzeitiger Zugabe von geringen Mengen einer gut mit Maleinsäureanhydrid copolymerisierbaren Monomerenmischung, wie z.B. Styrol, Butylacrylat, zu reduzieren.

Es ist auch möglich einen Teil des Maleinsäureanhydrids mit dem Lösungsmittel vorzulegen, oder das Maleinsäureanhydrid schneller als die anderen Monomeren zuzutropfen. Diese geänderten Herstellverfahren können in gewissen Fällen die Verträglichkeit der Komponenten der Bindemittelkombination verbessern.

Der Monomerenumsatz wird durch eine Bestimmung des Festgehaltes der Reaktionsmischung ermittelt und durch eine gaschromatographische Restmonomerenanalyse überprüft.

Vorzugsweise werden solche Radikalbildner eingesetzt die für Reaktionstemperaturen von 60 bis 180°C geeignet sind, wie organische Peroxide, z.B. Dibenzoylperoxid, Di-tert.-butylperoxid, Dilaurylperoxid, tert.-Butylperoxy-2-ethylhexanoat, tert.-Butylperoxymaleinat, tert.-Butylperoxybenzoat, Dicumylperoxid, Didecanoylperoxid, wie Azoverbindungen, z.B. 2,2′-Azobis-(2,4-dimethylvaleronitril), 2,2′-Azobis-(isobutyronitril), 2,2′-Azobis-(2,3-dimethylbutyronitril), 1,1′-Azobis-(1-cyclohexannitril).

Die Initiatoren können in Mengen von 0,5 bis 10 Gew.-%, bezogen auf Gesamtmonomere, eingesetzt werden. Gegebenenfalls können molekulargewichtsregelnde Substanzen, wie n-Dodecylmercaptan, tert.-

Dodecylmercaptan usw. in Mengen von 0 bis 10 Gew.-% eingesetzt werden.

Bei der Komponente B) handelt es sich um blockierte Aminogruppen aufweisende Verbindungen eines als Gewichtsmittel bestimmten Molekulargewichts von 115 bis 30 000, vorzugsweise von 115 bis 15 000 und insbesondere von 115 bis 6000 oder um Gemische derartiger Verbindungen. Niedere Molekulargewichte von bis zu ca. 1000 können aus der Stöchiometrie der zur Herstellung der Verbindungen eingesetzten Ausgangsmaterialien berechnet, höhere Molekulargewichte von über 1000 nach der Methode der Gelpermeationschromatographie ermittelt werden. Erfindungswesentlich ist hierbei, daß die die Komponente B) darstellenden Verbindungen im statistischen Mittel, gegebenenfalls neben anderen blockierten Aminogruppen, pro Molekül mindestens 0,1, vorzugsweise 0,5 bis 4 und insbesondere 1 bis 3 Struktureinheiten der allgemeinen Formeln (IV) (bicyclische Amidacetalgruppen) und/oder (V) (bicyclische Amidaminalgruppen)

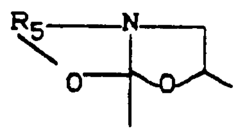 , 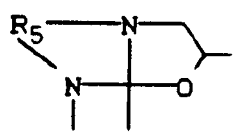

(IV) (V)

enthalten, wobei in diesen Formeln

$R_5$ für einen zweiwertigen aliphatischen Kohlenwasserstoffrest mit 2 bis 10 Kohlenstoffatomen steht, mit der Maßgabe, daß zwischen den beiden Heteroatomen 2 oder 3 Kohlenstoffatome angeordnet sind, wobei dieser Kohlenwasserstoffrest auch funktionelle Gruppen, insbesondere Hydroxylgruppen aufweisen kann.

Verbindungen, die erfindungsgemäß als Komponente B) geeignet sind, und die Struktureinheiten der Formel (IV) enthalten, können in an sich bekannter Weise durch Umsetzung von Epoxid- bzw. cyclische Carbonatgruppen enthaltenden Verbindungen mit cyclischen Iminoestern wie z.B. Oxazolinen oder Oxazinen erhalten werden. Vorzugsweise werden hierbei die Ausgangskomponenten in solchen Mengenverhältnissen eingesetzt, daß auf jede Epoxid- bzw. cyclische Carbonatgruppe insgesamt 1,0 bis 1,1 Oxazolin- oder Oxazingruppen entfallen. Derartige Umsetzungen, die zu bicyclische Amidacetalgruppen aufweisenden Verbindungen führen, sind beispielsweise in R. Feinauer, Liebigs Ann. Chem. 698, 174 (1966) ausführlich beschrieben.

Dabei können monofunktionelle Oxazoline bzw. Oxazine mit monofunktionellen Epoxiden bzw. Carbonaten, polyfunktionelle Oxazoline bzw. Oxazine mit monofunktionellen Epoxiden bzw. Carbonaten, monofunktionelle Oxazoline bzw. Oxazine mit polyfunktionellen Epoxiden bzw. Carbonaten umgesetzt werden.

Die zur Herstellung der bicyclischen Amidacetale verwendeten Oxazoline bzw. Oxazine können nach literaturbekannten Methoden wie z.B. durch Umsetzung von Carbonsäuren bzw. deren Anhydride mit Hydroxyaminen unter Wasserabspaltung oder durch Umsetzung von Nitrilen mit Hydroxyaminen unter Ammoniakabspaltung hergestellt werden. Derartige Umsetzungen sind beispielsweise in J. Org. Chem. 26, 3821 (1961), H.L. Wehrmeister, J. Org. Chem. 27, 4418 (1962) und P. Allen, J. Org. Chem. 28,2759 (1963) beschrieben.

Geeignete Carbonsäuren sind insbesondere aliphatische ein- oder mehrbasische Carbonsäuren wie z.B. Ameisensäure, Essigsäure, Capronsäure, 2-Ethylhexansäure, Sojaölfettsäure oder deren Anhydride; difunktionelle Carbonsäuren wie z.B. Bernsteinsäure, Adipinsäure, Azelainsäure, dimerisierte ungesättigte Fettsäuren, (Meth)acrylsäurecopolymerisate, Carboxylgruppen enthaltende Polyester, Trimellitsäure oder Pyromellitsäure, wobei unter den Monocarbonsäuren Ameisensäure, Essigsäure und Propionsäure bzw. deren Anhydride und unter den Dicarbonsäuren Adipinsäure, Azelainsäure und Dimerfettsäuren bevorzugt sind.

Geeignete Nitrile sind z.B. monofunktionelle Nitrile wie Acetonitril oder 3-Hydroxypropionitril; difunktionelle Nitrile wie Bernsteinsäuredinitril, Adipinsäuredinitril, Urethan-, Harnstoff-, Amid- oder Estergruppen-haltige Umsetzungsprodukte von 3-Hydroxypropionitril bzw. 3-Methylaminopropionitril mit Diisocyanaten oder Dicarbonsäuren; polyfunktionelle Nitrile wie Copolymerisate des Acrylnitrils, Umsetzungsprodukte von 3-Hydroxypropionitril bzw. 3-Methylaminopropionitril mit Polycarbonsäuren bzw. Polyisocyanaten, Urethangruppen enthaltende Umsetzungsprodukte aus Hydroxylgruppen enthaltenden Substanzen mit 6-Isocyanatohexansäurenitril.

Geeignete Hydroxyamine sind Aminoalkohole mit primären Aminogruppen wie z.B. 2-Aminoethanol, 3-Amino-1-propanol, 1-Amino-2-propanol, 4-Amino-2-butanol, 2-Amino-2-methyl-propanol, 2-Amino-2-methyl-1,3-propandiol, 2-Amino-2-hydroxymethyl-1,3-propandiol, 3-Amino-2-butanol oder Anlagerungsprodukte von Ammoniak an Epoxidgruppen enthaltende Verbindungen.

Hydroxylgruppen aufweisende Oxazoline bzw. Oxazine können auch beispielsweise durch Umsetzung mit organischen Polyisocyanaten in höherfunktionelle Oxazoline bzw. Oxazine überführt werden, wie dies am Beispiel der Oxazolinvorstufe 4 nachstehend gezeigt wird.

Folgende Oxazoline bzw. Oxazine seien zur näheren Erläuterung beispielhaft genannt:

Oxazolinvorstufe 1:

2-Ethyl-$\Delta^2$-oxazolin: Umsetzungsprodukt aus Propionsäureanhydrid und 2-Aminoethanol

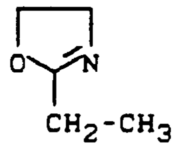

Oxazolinvorstufe 2:

5,5-Dimethyl-$\Delta^2$-oxazolin: Umsetzungsprodukt aus Ameisensäure und 2-Amino-2-methyl-propanol

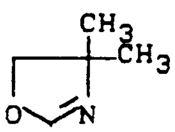

Oxazolinvorstufe 3:

5-Hydroxymethyl-5-methyl-$\Delta^2$-oxazolin: Umsetzungsprodukt aus Ameisensäure und 2-Amino-2-methyl-1,3-propandiol

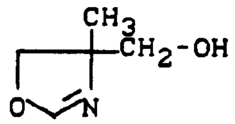

Oxazolinvorstufe 4:

Umsetzung aus Oxazolinvorstufe 3 und Hexamethylendiisocyanat

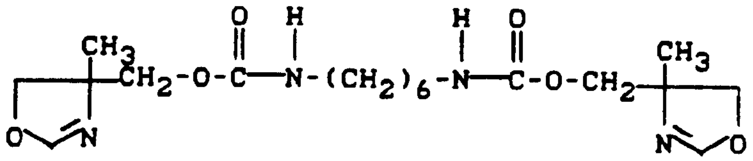

Oxazin-Vorstufe 5:

5,6-Dihydro-4H-1,3-oxazin: Umsetzungsprodukt aus Ameisensäure und 3-Amino-1-propanol

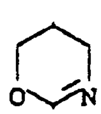

Oxazin-Vorstufe 6:

5,6-Dihydro-2-ethyl-4H-1,3-oxazin: Umsetzungsprodukt aus Propionsäureanhydrid und 3-Amino-1-propanol

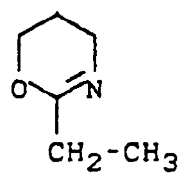

Aus den beispielhaft genannten Vorstufen, welche Oxazolin- bzw. Oxazingruppen aufweisen, werden durch Umsetzung mit Epoxiden oder cyclischen Carbonaten die zur Herstellung der erfindungsgemäßen Bindemittelkombinationen erforderlichen bicyclischen Amidacetale hergestellt.

Hierfür geeignet sind beispielsweise Monoepoxide wie Glycidylester der Versaticsäure (®Cardura E 10, Shell Chemie), 1,2-Epoxybutan, Cyclohexenoxid, Styroloxid, Phenylglycidylether, 1,2-Epoxy-2-methylpropan, 1-Allyloxy-2,3-epoxypropan, Decylglycidylether, Methylglycidylether, Stearylglycidylether, tert.-Butylglycidylether; 2-Ethylhexylglycidylether;
Diepoxide wie Glycerindiglycidylether, Polyethylenglykoldiglycidylether, Diethylenglykoldiglycidylether, Neopentylglykoldiglycidylether, Diepoxide auf Basis 4,4-(1-Methylethyliden)-bisphenol z.B. ®Lekutherm X 20, Bayer AG oder Polyepoxide wie Glycidylester von Polycarbonsäuren oder beliebige epoxidgruppenhaltige Copolymerisate.

Geeignete cyclische Carbonate sind z.B. Ethylencarbonat, Propylencarbonat, Glycerincarbonat oder die Umsetzungsprodukte von Glycerincarbonat mit Di- und Polyisocyanaten im NCO/OH-Äquivalentverhältnis 1:1 wie z.B. das Umsetzungsprodukt von 2 Mol Glycerincarbonat mit 1 Mol 1,6-Diisocyanatohexan.

Typische Beispiele für bicyclische Amidacetale, die erfindungsgemäß als Komponente B) geeignet sind, sind die folgenden Verbindungen:

Amidacetalvernetzer 1:

Umsetzungsprodukt aus Oxazolinvorstufe 1 und Phenylglycidylether

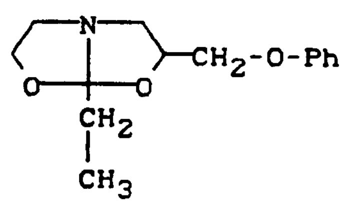

Amidacetalvernetzer 2:

Umsetzungsprodukt aus Oxazolinvorstufe 1 und Styroloxid

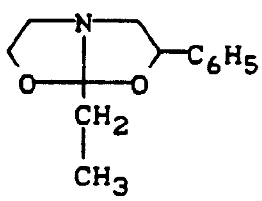

Amidacetalvernetzer 3:

Umsetzungsprodukt aus Oxazolinvorstufe 1 und Ethylencarbonat

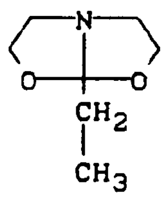

Amidacetalvernetzer 4:

Umsetzungsprodukt aus Oxazolinvorstufe 1 und Neopentylglykoldiglycidylether

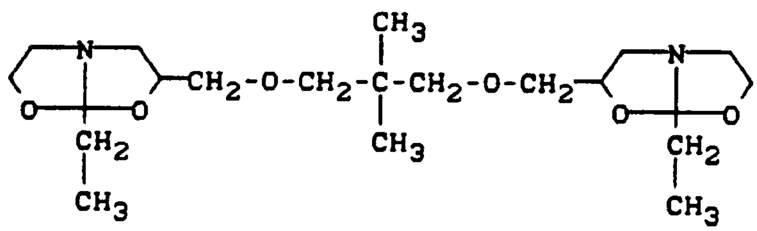

Amidacetalvernetzer 5:

Umsetzungsprodukt aus Oxazolinvorstufe 4 und Styroloxid

Amidacetalvernetzer 6:

Umsetzungsprodukt aus Oxazin-Vorstufe 5 und Styroloxid.

Bicyclische Amidaminale, die erfindungsgemäß als Komponente B) geeignet sind, können beispielsweise durch Umsetzung von Tetrahydropyrimidinen bzw. Dihydroimidazolen mit organischen Epoxiden oder cyclischen Carbonaten der bereits beispielhaft genannten Art erhalten werden.

Dabei können monofunktionelle Tetrahydropyrimidine bzw. Dihydroimidazole mit monofunktionellen Epoxiden bzw. Carbonaten, polyfunktionelle Tetrahydropyrimidine bzw. Dihydroimidazole mit monofunktionellen Epoxiden bzw. Carbonaten, monofunktionelle Tetrahydropyrimidine bzw. Dihydroimidazole mit polyfunktionellen Epoxiden bzw. Carbonaten umgesetzt werden.

Die zur Herstellung der bicyclischen Amidaminale verwendeten Tetrahydropyrimidine bzw. Dihydroimidazole können nach literaturbekannten Methoden, wie z.B. durch Umsetzung von Carbonsäuren mit Diaminen unter Wasserabspaltung, oder durch Umsetzung von Nitrilen mit Diaminen unter Ammoniakabspaltung hergestellt werden. Derartige Umsetzungen sind beispielsweise in der DE-OS 3 640 239 beschrieben.

Geeignete Carbonsäuren sind z.B. die bei der Herstellung der Amidacetale beispielhaft genannten Mono-, Di- und Polycarbonsäuren. Geeignete Nitrile sind z.B. die bei der Herstellung der Amidacetale beispielhaft genannten Mono-, Di- und Polynitrile.

Geeignete Diamine sind z.B. 1-Methylaminopropanamin, 1-Ethylaminopropanamin, 1,2-Propandiamin, 1,3-Propandiamin, Diethylentriamin, Dipropylentriamin, 2-(2-Aminoethylamino)-ethanol.

Folgende Tetrahydropyrimidine bzw. Dihydroimidazole seien zur näheren Erläuterung beispielhaft genannt:

Tetrahydropyrimidinvorstufe 7:

Umsetzungsprodukt aus 1-Methylaminopropanamin und Essigsäure

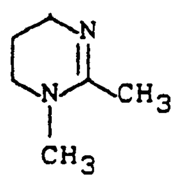

Dihydroimidazolvorstufe 8:

Umsetzungsprodukt aus 2-(2-Aminoethylamino)-ethanol und Essigsäure

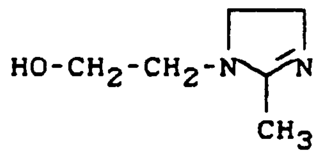

Tetrahydropyrimidinvorstufe 9:

Umsetzungsprodukt aus Adipinsäuredinitril und 1-Methylaminopropanamin

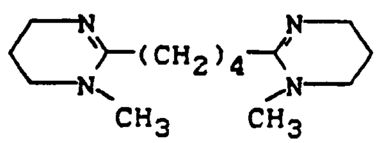

Tetrahydropyrimidinvorstufe 10:

Umsetzungsprodukt aus Dimerfettsäuren (z.B. ®Pripol 1009, Unichema) und 1-Methylaminopropanamin

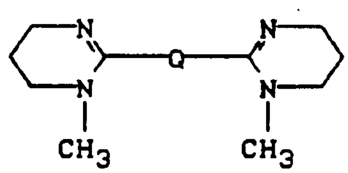

Q steht für den die Carboxylgruppen der dimerisierten Fettsäure verknüpfenden Kohlenwasserstoffrest.

Aus den beispielhaft genannten Aminovorstufen, welche Tetrahydropyrimidin- bzw. Dihydroimidazolgruppen enthalten, werden durch Umsetzung mit Epoxiden oder cyclischen Carbonaten die zur Herstellung der erfindungsgemäßen Bindemittelkombinationen erforderlichen Amidaminale erhalten. Derartige Umsetzungen sind beispielsweise beschrieben in R. Feinauer, Angew. Chem. 78, 938 (1966).

Folgende Produkte seien zur näheren Erläuterung beispielhaft genannt:

Amidaminalvernetzer 7:

Umsetzungsprodukt aus Tetrahydropyrimidinvorstufe 7 und dem Bis-glycidylether von Bisphenol A

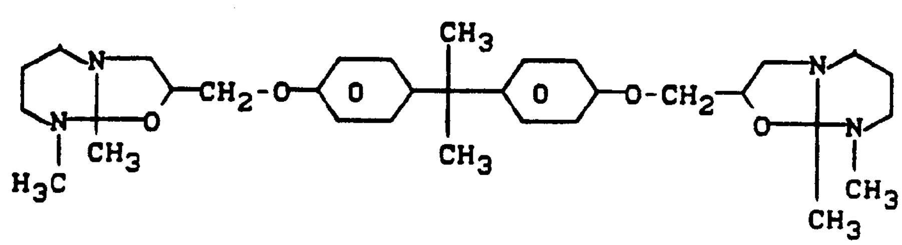

Amidaminalvernetzer 8:

Umsetzungsprodukt aus Dihydroimidazolvorstufe 8 und Styroloxid, welches anschließend mit Adipinsäuredimethylester umgesetzt wird.

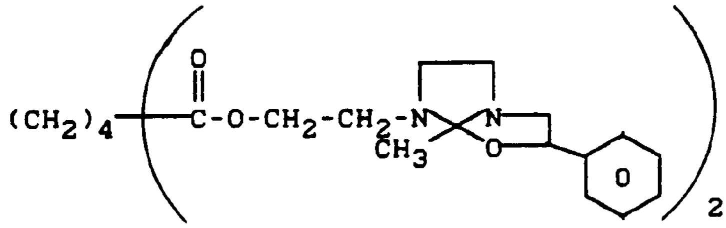

Amidaminalvernetzer 9:

Tetrahydropyrimidinvorstufe 10 wird umgesetzt mit ®Cardura E 10 (Glycidylester der Versaticsäure; Shell Chemie)

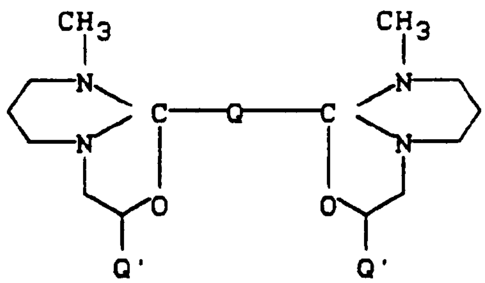

Q' steht formal für den Rest, der durch Entfernung der Epoxidgruppe aus dem Glycidylester der Versaticsäure erhalten wird.

In den als Komponente B) geeigneten Verbindungen können neben Struktureinheiten der Formel (IV) und (V) auch Struktureinheiten der Formeln (VI) (Tetrahydroimidazol- bzw. Hexahydropyrimidingruppen), (VII) (Oxazolan- bzw. Oxazangruppen) und/oder (VIII) Aldimin- bzw. Ketimingruppen vorliegen.

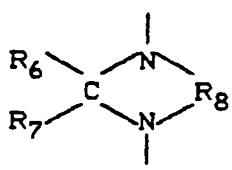 , 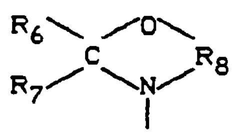 , 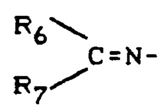

(VI) (VII) (VIII)

In diesen Formeln stehen

$R_6$ und $R_7$ für gleiche oder verschiedene Reste und bedeuten Wasserstoff, aliphatische Kohlenwasserstoffreste mit 1 bis 18 Kohlenstoffatomen, cycloaliphatische Kohlenwasserstoffreste mit 5 bis 10 Kohlenstoffatomen, araliphatische Kohlenwasserstoffreste mit 7 bis 18 Kohlenstoffatomen oder Phenylreste, wobei die beiden Reste $R_6$ und $R_7$ zusammen mit dem benachbarten Kohlenstoffatom auch einen 5-oder 6-gliedrigen cycloaliphatischen Ring bilden können, und wobei vorzugsweise höchstens einer der Reste für Wasserstoff steht, und

$R_6$ einen zweiwertigen aliphatischen Kohlenwasserstoffrest mit 2 bis 6 Kohlenstoffatomen, mit der Maßgabe, daß zwischen den beiden Stickstoffatomen bzw. zwischen Stickstoff- und Sauerstoffatom 2 oder 3 Kohlenstoffe angeordnet sind.

Verbindungen, die die Struktureinheiten (VI) aufweisen, werden in an sich bekannter Weise durch Umsetzung geeigneter Carbonylverbindungen der Formel

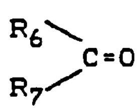

mit aliphatischen primären und/oder sekundären 1,2- oder 1,3-Diaminen dadurch erhalten, daß man die Ausgangsverbindungen am Wasserabscheider solange erhitzt, bis die theoretische Wassermenge abgespalten bzw. die Wasserabscheidung beendet ist.

Hierzu geeignete Carbonylverbindungen sind beispielsweise Aceton, Methylethylketon, Methylpropylketon, Methylisopropylketon, Methyl-n-butylketon, Methylisobutylketon, Methyl-n-amylketon, Methylisoamylketon, Methylheptylketon, Diethylketon, Ethylbutylketon, Ethylamylketon, Diisopropylketon, Diisobutylketon, Cyclohexanon, Isophoron, Methyl-tert.-butylketon, 5-Methyl-3-heptanon, 4-Heptylketon, 1-Phenyl-2-propanon, Acetophenon, Methylnonylketon, 3,3,5-Trimethylcyclohexanon, Formaldehyd, Acetaldehyd, Propionaldehyd, Butyraldehyd, Isobutyraldehyd, Trimethylacetaldehyd, 2,2-Dimethylpropanal, 2-Ethylhexanal, 3-Cyclohexen-1-carboxaldehyd, Hexanal, Heptanal, Octanal, Valeraldehyd, Benzaldehyd, Tetrahydrobenzaldehyd, Propargylaldehyd, p-Tolylaldehyd, 2-Methylpentanal, Phenylethanal oder 4-Methylpentanal.

Für die Reaktion geeignete 1,2- bzw. 1,3-Diamine sind beispielsweise Ethylendiamin, 1,2-Propylendiamin, 1,3-Propylendiamin, 1,2-Butylendiamin oder 1,3-Butylendiamin. Für die Eignung der Polyamine allein ausschlaggebend ist das Vorliegen von zwei Aminogruppen in 1,2- bzw. 1,3-Stellung. Demzufolge sind auch höherfunktionelle Polyamine als Aminkomponente geeignet, in denen diese Bedingung vorliegt wie beispielsweise Diethylentriamin oder Dipropylentriamin.

Verbindungen, die Struktureinheiten der Formel (VII) aufweisen, werden in völliger Analogie hierzu aus den beispielhaft genannten Carbonylverbindungen und geeigneten Aminoalkoholen erhalten, in denen zwischen der Hydroxyl- und der primären bzw. sekundären Aminogruppe 2 oder 3 Kohlenstoffatome angeordnet sind.

Geeignete Aminoalkohole sind beispielsweise Bis-(2-hydroxyethyl)-amin, Bis-(2-hydroxypropyl)-amin, Bis-(2-hydroxybutyl)-amin, Bis-(3-hydroxypropyl)-amin, Bis-(3-hydroxyhexyl)-amin, N-(2-hydroxypropyl)-N-(2-hydroxyethyl)-amin, 2-(Methylamino)-ethanol, 2-(Ethylamino)-ethanol, 2-(Propylamino)-ethanol, 2-(Butylamino)-ethanol, 2-(Hexylamino)-ethanol, 2-(Cyclohexylamino)-ethanol, 2-Amino-2-propyl-1-propanol, 2-Amino-2-methyl-1,3-propandiol, 2-Amino-3-methyl-3-hydroxybutan, Propanolamin oder Ethanolamin.

Verbindungen, die Struktureinheiten der Formel (VII) aufweisen, werden in völliger Analogie durch Umsetzung der beispielhaft genannten Carbonylverbindungen mit primären Aminen, vorzugsweise Diaminen erhalten, in denen zwischen den beiden Aminogruppen mehr als 3 Kohlenstoffatome angeordnet sind.

Derartige Diamine sind beispielsweise Hexamethylendiamin, Isophorondiamin, Bis-(4-aminocyclohexyl)-methan, Bis-aminomethylhexahydro-4,7-methanoindan, 1,4-Cyclohexandiamin, 1,3-Cyclohexandiamin, 2-Methylcyclohexandiamin, 4-Methylcyclohexandiamin, 2,2,5-Trimethylhexandiamin, 2,2,4-Trimethylhexandiamin, 1,4-Butandiol-bis-(3-aminopropyl)-ether, 2,5-Diamino-2,5-dimethylhexan, Bis-aminomethylcyclohexan, Bis-(4-amino-3,5-dimethylcyclohexyl)-methan.

Für die Herstellung der Ald- bzw. Ketimine können auch primäre Aminogruppen aufweisende Prepolymere eingesetzt werden, d.h. Verbindungen, die mindestens zwei endständige primäre Aminogruppen und ein Molekulargewicht von bis zu 5000 aufweisen, die aus der Polyurethanchemie an sich bekannten Aminopolyether, wie sie z.B. in der EP-A 0 081 701 beschrieben werden, oder z.B. Amid-, Urethan-, Harnstoffgruppen-haltige Umsetzungsprodukte von mindestens difunktionellen Carbonsäuren, Isocyanaten oder Epoxiden mit Polyaminen, wobei die Umsetzungsprodukte mindestens zwei Aminogruppen aufweisen müssen, von denen mindestens eine eine primäre Aminogruppe darstellt. Im Falle der Verwendung von Polyaminen wie beispielsweise Diethylentriamin oder Dipropylentriamin entstehen bei der Umsetzung sowohl Struktureinheiten der Formel (VI) als auch solche der Formel (VIII).

Als Komponente B) geeignete Verbindungen die neben Struktureinheiten der Formeln (IV) und/oder (V) solche der Formeln (VI), (VII) und/oder (VIII) aufweisen, können erhalten werden, wenn Verbindungen mit den genannten Struktureinheiten, die mindestens ein aktives Wasserstoffatom aufweisen, (vorzugsweise mindestens eine Hydroxyl-, primäre Amino-oder sekundäre Aminogruppe) mit Modifizierungsmitteln der nachstehend beispielhaft genannten Art miteinander verknüpft werden.

Verbindungen, die Struktureinheiten der Formeln (IV) oder (V) und gleichzeitig aktive Wasserstoffatome, insbesondere Hydroxyl- oder primäre bzw. sekundäre Aminogruppen aufweisen, und die die Vorstufe für die Modifizierungsreaktion darstellen, können beispielsweise erhalten werden, wenn man zur Herstellung der Oxazolin-, Oxazin-, Dihydroimidazol- oder Tetrahydropyrimidinvorstufen Hydroxylgruppen aufweisende Carbonsäuren wie beispielsweise 2-Hydroxyessigsäure, Triamine wie beispielsweise Diethylentriamin oder Dipropylentriamin oder Aminoalkohole mit insgesamt mindestens drei Amino- und Hydroxylgruppen wie beispielsweise 2-(2-Aminoethylamino)-ethanol verwendet und/oder indem man die genannten Vorstufen mit Hydroxylgruppen aufweisenden Epoxiden wie beispielsweise Epoxid- und Hydroxygruppen aufweisenden Epoxidharzen oder mit Hydroxylgruppen aufweisenden cyclischen Carbonaten wie beispielsweise Glycerincarbonat entsprechend den obengemachten Ausführungen zur Reaktion bringt.

Verbindungen mit Struktureinheiten der Formeln (VI), (VII) oder (VIII), die aktive Wasserstoffatome der genannten Art aufweisen, können auf die unterschiedlichste Weise erhalten werden.

Ketimin- bzw. Aldimingruppen-haltige Polyamine, die noch mindestens eine freie primäre bzw. sekundäre Aminogruppe aufweisen, erhält man z.B. durch Umsetzung von mindestens difunktionellen Aminen mit Ketonen und/oder Aldehyden in solchen Äquivalentverhältnissen, daß mindestens eine Aminogruppe frei bleibt.

Auch bei der Verwendung von beispielsweise solchen Polyaminen, die neben zwei primären Aminogruppen mindestens eine sekundäre Aminogruppe aufweisen, entstehen bei der Umsetzung mit Aldehyden oder Ketonen Aldimine bzw. Ketimine, die mindestens eine freie sekundäre Aminogruppe aufweisen (falls unter Einhaltung eines Äquivalentverhältnisses von primären Aminogruppen zu Carbonylgruppen von 1:1 gearbeitet worden ist), bzw. die neben mindestens einer sekundären Aminogruppe noch freie primäre Aminogruppen enthalten (falls die Carbonylverbindungen, bezogen auf die primären Aminogruppen, im Unterschuß verwendet worden sind). Derartige primär-sekundäre Polyamine sind beispielsweise Diethylentriamin, Triethylentetramin, Tetraethylenpentamin, Dipropylentriamin, Tripropylentriamin.

Oxazolan- bzw. Oxazangruppen enthaltende Verbindungen, die aktive Wasserstoffatome der genannten Art tragen, entstehen beispielsweise durch Umsetzung von Hydroxyaminen, die neben einer Hydroxygruppe und einer sekundären Aminogruppe noch mindestens eine weitere Hydroxygruppe und/oder primäre bzw. sekundäre Aminogruppe aufweisen.

Hexahydropyrimidin- bzw. Tetrahydroimidazolgruppen enthaltende Verbindungen, die noch mindestens ein aktives Wasserstoffatom der genannten Art aufweisen, entstehen bei Verwendung von Hydroxydiaminen oder von Triaminen der bereits oben beispielhaft genannten Art bei der Herstellung der Hexahydropyrimidine bzw. Tetrahydroimidazole.

Zur Herstellung von höherfunktionellen Verbindungen, die sowohl Struktureinheiten der Formeln (IV) oder (V) als auch der Formeln (VI), (VII) oder (VIII) aufweisen werden die genannten Vorstufen mit aktiven Wasserstoffatomen mit geeigneten Modifizierungsmitteln zur Reaktion gebracht, wobei eine Verknüpfung der genannten Strukturelemente unter Ausbildung von z.B. Ester-, Ether-, Amid-, Harnstoff- und/oder Urethanbindungen erfolgt, in völliger Analogie zu dem weiter oben beschriebenen bicyclischen Amidaminalvernetzer (8).

Geeignete Modifizierungsmittel sind insbesondere organische Polyisocyanate, Polyepoxide, Polycarbonsäuren, Polycarbonsäureanhydride, niedere Polycarbonsäureester, insbesondere Methylester oder Verbindungen, welche mindestens zwei olefinisch ungesättigte, mit sekundären Aminen im Sinne einer Additionsreaktion reagierende Doppelbindungen aufweisen.

Für diese Modifizierungsreaktion geeignete Polyisocyanate sind beispielsweise aliphatische, cycloaliphatische, araliphatische, aromatische oder heterocyclische Polyisocyanate, wie sie z.B. von W. Siefken in Justus Liebigs Annalen der Chemie, 562, S. 75 bis 136 beschrieben werden, beispielsweise 1,4-Tetramethylendiisocyanat, 1,6-Hexamethylendiisocyanat, 1,12-Dodecandiisocyanat, Cyclobutan-1,3-diisocyanat, Cyclohexan-1,3-diisocyanat, Cyclohexan-1,4-diisocyanat, 1-Isocyanato-3,3,5-trimethyl-5-isocyanatomethyl-cyclohexan, 1,4- und 2,6-Hexahydrotoluylendiisocyanat, Hexahydro-1,3- und -1,4-phenylen-diisocyanat, Perhydro-2,4′- und/oder -4,4′-diphenyl-methyldiisocyanat, 1,3-Phenylendiisocyanat, 1,4-Phenylendiisocyanat, Diphenylmethan-2,4′- und/oder -4,4′-diisocyanat, Naphthylen-1,5-diisocyanat, Gemische dieser und anderer Polyisocyanate, Polyisocyanate mit Carbodiimidgruppen (z.B. DE-PS 10 92 007), Polyisocyanate mit Allophanatgruppen (z.B. GB-PS 994 890), Isocyanuratgruppen aufweisende Polyisocyanate (z.B. DE-PS 10 22 789, DE-PS 12 22 067), Urethangruppen aufweisende Polyisocyanate (z.B. US-PS 33 94 164) oder durch Umsetzung von mindestens difunktionellen Hydroxyverbindungen mit überschüssigen, mindestens difunktionellen Isocyanaten hergestellten Polyisocyanate, Biuretgruppen aufweisende Polyisocyanate (z.B. DE-PS 11 01 394) und präpolymere bzw. polymere Substanzen mit mindestens zwei Isocyanatgruppen.

Vertreter dieser erfindungsgemäß zu verwendenden Verbindungen sind z.B. in High Polymers, Vol. XVI, "Polyurethans, Chemistry and Technology" Interscience Publishers, New York, London, Band I, 1962, S. 32-42 bzw. 45-54 und Band II, 1964, S. 5-6 und 198-199, sowie im Kunststoffhandbuch, Band VII, Vieweg-Höchtlen, Carl-Hanser-Verlag, München, 1966, S. 45-71, beschrieben.

Für die genannte Modifizierungsreaktion geeignete Polyepoxide sind beispielsweise aliphatische, cycloaliphatische, araliphatische, aromatische und heterocyclische, mindestens zwei Epoxidgruppen enthaltende Substanzen, wie z.B. epoxidierte Ester aliphatischer polybasischer Säuren mit ungesättigten einwertigen Alkoholen, Glycidylether von Polyhydroxyverbindungen, Glycidylester von Polycarbonsäuren, epoxidgruppenhaltige Copolymerisate.

Für die Modifizierungsreaktion geeignete Polycarbonsäuren sind beispielsweise aliphatische, cycloaliphatische, araliphatische, aromatische und heterocyclische, mindestens zwei Carboxylgruppen enthaltende Substanzen, wie z.B. Adipinsäure, Dimerfettsäure, Phthalsäure, Terephthalsäure, Isophthalsäure, Fumarsäure, Maleinsäure, Bernsteinsäure, Trimellitsäure, Pyromellitsäure, (Meth)acrylsäure-haltige Copolymerisate, saure Polyester oder saure Polyamide.

Anstelle der beispielhaft genannten Säuren können auch die entsprechenden Säureanhydride (sofern es

sich um intramolekulare Anhydride bildende Säuren handelt) oder die entsprechenden einfachen Alkylester, insbesondere Methylester für die Modifizierungsreaktion eingesetzt werden.

Für die Modifizierungsreaktion geeignete Verbindungen mit mindestens zwei olefinischen Doppelbindungen der genannten Art sind insbesondere Derivate der Acrylsäure bzw. Methacrylsäure wie beispielsweise Hexandiol-bis-(meth)acrylsäureester, Trimethylolpropan-tris-(meth)acrylsäureester, Pentaerythrittetra- (meth)acrylsäureester, OH-funktionelle Polyester bzw. Polyacrylate, die mit Acrylsäure verestert sind, Diethylenglykoldimethacrylsäureester, Umsetzungsprodukte von Polyepoxiden mit (Meth)acrylsäure oder Umsetzungsprodukte von Polyisocyanaten mit Hydroxyalkyl(meth)acrylat.

Ebenfalls möglich ist natürlich eine analoge Modifizierungsreaktion unter Verwendung von ausschließlich solchen Vorstufen, die erfindungswesentliche Struktureinheiten (IV) oder (V) aufweisen. Durch die Modifizierungsreaktion zur Herstellung von höherfunktionellen Verbindungen sind somit die unterschiedlichsten Komponenten B) herstellbar.

Die Modifizierungsreaktion wird üblicherweise in einem Lösungsmittel der oben beispielhaft genannten Art bei Reaktionstemperaturen von 30 bis 180°C, gegebenenfalls am Wasserabscheider, durchgeführt.

Dabei wird in der Regel ein äquivalentes Verhältnis von reaktionsfähigen Gruppen der blockierten Polyamine zu den reaktionsfähigen Gruppen des "Modifizierungsmittels" gewählt. Es ist jedoch auch möglich, die "Modifizierungsmittel" im Unterschuß, etwa unter Verwendung von 0,75 bis 0,99-fach äquivalenten Mengen einzusetzen.

Falls bei der Modifizierungsreaktion neben den bicyclischen Amidacetalen bzw. bicyclischen Amidaminalen weitere blockierte Polyamine der beispielhaft genannten Art mit gegenüber dem "Modifizierungsmittel" reaktionsfähigen Gruppen verwendet werden, geschieht dies maximal in solchen Mengen, daß in dem resultierenden, modifizierten Umsetzungsprodukt im statistischen Mittel auf jede bicyclische Amidacetale- bzw. bicyclische Amidaminalgruppe maximal 10, vorzugsweise maximal 5 Aldimin-, Ketimin-, Oxazan-, Oxazolan-, Hexahydropyrimidin-, Tetrahydroimidazolgruppen fallen.

Als erfindungswesentliche Komponente B) sind somit sowohl Verbindungen geeignet, die als blockierte Aminogruppen ausschließlich solche der Struktur (IV) bzw. (V) aufweisen als auch solche, die neben diesen Struktureinheiten Struktureinheiten der Formeln (VI), (VII) und/oder (VIII) aufweisen. Beide Typen von erfindungsgemäß geeigneten Verbindungen können außerdem noch freie aktive Wasserstoffatome, insbesondere Hydroxyl-, primäre Amino- oder sekundäre Aminogruppen aufweisen, die bei der Durchführung des erfindungsgemäßen Verfahrens gegebenenfalls bereits in Abwesenheit von Feuchtigkeit mit einem Teil der Säureanhydridgruppen reagieren.

Bei der Durchführung des erfindungsgemäßen Verfahrens können als Hilfs- bzw. Zusatzstoffe, gegebenenfalls neben weiteren Hilfs- und Zusatzstoffen, auch weitere, bicyclische Amidacetal- bzw. bicyclische Amidaminalgruppen-freie blockierte Polyamine mitverwendet werden. Hierbei handelt es sich insbesondere um Aldimine, Ketimine, Oxazane, Oxazolane, Hexahydropyrimidine, Tetrahydroimidazole, die mit den erfindungswesentlichen bicyclischen Amidacetalen bzw. Amidaminalen nicht chemisch verknüpft sind. Es können sowohl Hydroxyl- oder Aminogruppen aufweisende derartige Verbindungen der oben beispielhaft genannten Art als auch gegenüber Säureanhydridgruppen in Abwesenheit von Feuchtigkeit inerte derartige Verbindungen eingesetzt werden. Die Herstellung dieser Hilfs- und Zusatzstoffe erfolgt entsprechend den obengemachten Ausführungen, wobei jedoch Art und Mengenverhältnisse der zur Herstellung der blockierten Amine verwendeten Ausgangsmaterialien so gewählt werden, daß keine freie Hydroxyl- bzw. primäre oder sekundäre Aminogruppe mehr vorliegen.

Die Mitverwendung von derartigen Hilfs- und Zusatzstoffen beim erfindungsgemäßen Verfahren erfolgt allenfalls in solchen Mengen, daß in den letztendlich erhaltenen erfindungsgemäßen Bindemittelkombinationen mindestens 10, vorzugsweise mindestens 20 Mol-% der blockierten Aminogruppen bicyclische Amidacetal- bzw. bicyclische Amidaminalgruppen darstellen, wobei sowohl diese in der Komponente B) vorliegenden Gruppen als auch die anderen in der Komponente B) gegebenenfalls vorliegenden blockierten Aminogruppen als auch die in Form von Hilfs- und Zusatzstoffen der zuletzt genannten Art eingebrachten blockierten Aminogruppen in die Berechnung eingehen.

Die Durchführung des erfindungsgemäßen Verfahrens erfolgt dergestalt, daß man die Ausgangskomponenten A) und B), sowie die gegebenenfalls mitzuverwendenden Hilfs- und Zusatzstoffe miteinander vermischt, wobei vor, während oder nach der Herstellung der Mischungen der Einzelkomponenten inerte organische Lösungs- bzw. Verdünnungsmittel der oben bereits beispielhaft genannten Art zugegen sein können. Gegebenenfalls können diese Lösungs- bzw. Verdünnungsmittel auch schon während der Herstellung einer oder mehrerer Ausgangskomponenten zugegen sein, wie dies z.B. vorstehend bei der Herstellung der bernsteinsäureanhydridhaltigen Copolymerisate beschrieben ist. Weitere geeignete Lösungs- bzw. Verdünnungsmittel zur Herstellung der Bindemittelkombination können z.B. Alkohole sein, welche in bestimmten Fällen die Eigenschaften der Bindemittelkombinationen beeinflussen. Geeignet sind z.B. Ethanol, n-Propanol, iso-Propanol, n-Butanol, sec.-Butanol, tert.-Butanol, n-Pentanol, iso-Pentanol, n-Hexanol, Octanol, Methylglykol, Ethylglykol, Propylglykol, Isopropylglykol, Butylglykol, Methyldiglykol, Ethyldiglykol, Propylglykolmonomethylether, Tripropylenglykolmonomethylether, Dipropylenglykolmonomethylether, Glykolsäurealkylester, Milchsäurealkylester, 2-Ethylbutanol, 2-Ethylhexanol, 3-Methoxybutanol, Diacetonalkohol, Furfurylalkohol, Tetrahydrofurfurylalkohol. Die Lösungs- bzw. Verdünnungsmittel sollten weitgehend wasserfrei sein, um eine ausreichende Verarbeitungszeit der Gemische sicherzustellen. Lösungs- bzw. Verdünnungsmittel werden im allgemeinen in solchen Mengen mitverwendet, die zur Einstellung von geeigneten Verarbeitungsviskositäten der erfindungsgemäßen Kombinationen erforderlich sind. Der Festgehalt der der erfindungsgemäßen Verwendung zuzuführenden erfindungsgemäßen Kombination liegt in der Regel zwischen 20 und 90 Gew.-%. Durch Verwendung geeigneter niedermolekularer bernsteinsäureanhydridhaltiger Copolymerisate ist es jedoch auch prinzipiell möglich, den Lösungs- bzw. Verdünnungsmittelgehalt noch weiter zu reduzieren.

Gemäß einer bevorzugten Ausführungsform des erfindungsgemäßen Verfahrens werden als alleinige blockierte Polyamine Verbindungen B) eingesetzt, die keine in Abwesenheit von Feuchtigkeit gegenüber Anhydridgruppen reaktionsfähige Gruppen aufweisen, und deren blockierte Aminogruppen ausschließlich aus bicyclischen Amidacetalund/oder bicyclischen Amidaminalgruppen der genannten Art bestehen.

Die bevorzugten, so hergestellten erfindungsgemäßen Kompositionen enthalten 65 bis 95 Gew.-Teile an Polyanhydriden A) und 5 bis 45 Gew.-Teile bicyclische Amidacetal- bzw. bicyclische Amidaminalgruppen aufweisende Verbindungen B).

Falls als Komponente B) bicyclische Amidacetale oder bicyclische Amidaminale bzw. als Hilfs- und Zusatzmittel Verbindungen mit blockierten Aminogruppen eingesetzt werden, die in Abwesenheit von Feuchtigkeit gegenüber Säureanhydridgruppen reaktionsfähige Gruppen, d.h. insbesondere Hydroxyl-, primäre oder sekundäre Aminogruppen enthalten, resultieren als Verfahrensprodukte komplexe Gemische, in denen Amid- oder Estergruppen aufweisende Umsetzungsprodukte der Copolymerisate A) mit den reaktionsfähigen Verbindungen B) bzw. den reaktionsfähigen, als Hilfs- bzw. Zusatzstoff mitverwendeten blockierten Polyaminen vorliegen. Neben diesen Umsetzungsprodukten können in den erhaltenen Verfahrensprodukten auch noch überschüssige, nicht umgesetzte Copolymerisate A) oder gegebenenfalls mitverwendete, gegenüber Säureanhydridgruppen inerte blockierte Polyamine vorliegen. Bei den genannten, Amid- oder Estergruppen aufweisenden Umsetzungsprodukten kann es sich sowohl um blockierte Aminogruppen aufweisende Umsetzungsprodukte (Umsetzungsprodukte aus Copolymerisaten A) mit Hexahydropyrimidinen, Tetrahydroimidazolen, Aldiminen, Ketiminen, Oxazanen, Oxazolanen, bicyclischen Amidacetalen, bicyclischen Amidaminalen mit chemisch gebundenen aktiven Wasserstoffatomen, als auch um Umsetzungsprodukte handeln, die keine blockierten Aminogruppen aufweisen (Umsetzungsprodukte von Copolymerisaten A) mit gegebenenfalls im Gemisch mit den blockierten Polyaminen vorliegenden Polyaminen oder Hydroxyaminen der zu ihrer Herstellung eingesetzten Art). Unter "gegenüber Säureanhydridgruppen reaktionsfähige Wasserstoffatome aufweisende, blockierten Polyamine" sollen nämlich im Rahmen der Erfindung nicht nur solche blockierte Polyamine zu verstehen sein, die reaktionsfähige Wasserstoffatome in chemisch gebundener Form enthalten, sondern vielmehr auch solche, die im Gemisch mit überschüssigem, zu ihrer Herstellung eingesetztem Polyamin bzw. Hydroxyamin vorliegen.

Bei allen Varianten der Durchführung des erfindungsgemäßen Verfahrens werden im übrigen Art und Mengenverhältnisse der Einzelkomponenten so gewählt, daß unter Einbeziehung der evtl. spontan zwischen Säureanhydrid- bzw. Epoxidgruppen und gegenüber Säureanhydrid- bzw. Epoxidgruppen reaktionsfähigen Gruppen, insbesondere Amino- bzw. Hydroxylgruppen ablaufenden Reaktion in den letztendlich erhaltenen Bindemittelkombinationen für jede bicyclische Amidacetal- bzw. bicyclische Amidaminalgruppe 0,25 bis 50, vorzugsweise 0,5 bis 10 und insbesondere bevorzugt 0,6 bis 5 Anhydridgruppen vorliegen. Ein verhältnismäßig hoher Überschuß an Anhydridgruppen gegenüber den genannten blockierten Aminogruppen ist dann angezeigt, wenn diese zusammen mit anderen blockierten Aminogruppen der genannten Art vorliegen. Vorzugsweise liegt das Molverhältnis von Säureanhydridgruppen zu allen blockierten Aminogruppen nach Beendigung der gegebenenfalls spontan ablaufenden Reaktion zwischen Säureanhydridgruppen und gegenüber Säureanhydridgruppen reaktionsfähigen Gruppen bei 0,5:1 bis 2:1.

Bezüglich der Verwendbarkeit der erfindungsgemäßen Verfahrensprodukte ist es weitgehend ohne Bedeutung, ob die gegebenenfalls spontan ablaufende Reaktion zwischen den Copolymerisaten A) und den gegenüber Säureanhydridgruppen reaktionsfähigen Gruppen bereits vollständig zum Abschluß gekommen ist. Gewünschten falls ist es jedoch möglich, diese Reaktion vor der erfindungsgemäßen Verwendung der Verfahrensprodukte durch kurzzeitiges Erhitzen auf 40 bis 100°C zum Abschluß zu bringen. Im übrigen erfolgt die Durchführung des erfindungsgemäßen Verfahrens vorzugsweise bei Raumtemperatur.

Bei der Durchführung des erfindungsgemäßen Verfahrens können selbstverständlich jeweils beliebige Gemische unterschiedlicher Einzelkomponenten A) und B) zur Anwendung gelangen.

Die erfindungsgemäßen Verfahrensprodukte sind im allgemeinen bei Raumtemperatur flüssig, sie sind in

Abwesenheit von Wasser ausreichend lagerstabil und härten nach Applikation auf ein Substrat in Gegenwart von Luftfeuchtigkeit im allgemeinen rasch aus.

In der Regel werden bereits bei Raumtemperatur vernetzte Filme erhalten. Die an sich schon sehr rasche Aushärtung kann durch Trocknung bei höheren Temperaturen noch weiter beschleunigt werden. Dabei sind Temperaturen von 80 bis 130°C und Trocknungszeiten von 10 bis 30 Minuten vorteilhaft.

Bei Verwendung von besonders hydrolysestabilen blockierten Aminogruppen kann diese forcierte Trocknung bei höheren Temperaturen erforderlich sein, um das optimale Eigenschaftsbild zu erhalten.

Die der erfindungsgemäßen Verwendung zuzuführenden, die erfindungsgemäßen Verfahrensprodukte als Bindemittel enthaltenden Lacke und Beschichtungsmassen können die in der Lacktechnologie üblichen Hilfs- und Zusatzstoffe, wie beispielsweise Pigmente, Füllstoffe, Verlaufshilfsmittel, Antioxidantien oder UV-Absorber enthalten.

Diese Hilfs- und Zusatzstoffe sollten möglichst wasserfrei sein und werden vorzugsweise bereits vor der Durchführung des erfindungsgemäßen Verfahrens den Ausgangskomponenten, im allgemeinen der Komponente A), einverleibt.

Die die erfindungsgemäßen Verfahrensprodukte als Bindemittel enthaltenden Lacke und Beschichtungsmassen weisen in Abwesenheit von Feuchtigkeit im allgemeinen eine Topfzeit von 1 bis 24 Stunden auf. Durch Auswahl geeigneter Reaktionspartner kann die Topfzeit jedoch beliebig nach oben oder unten korrigiert werden. Die Lacke und Beschichtungsmassen können nach den üblichen Methoden beispielsweise durch Spritzen, Streichen, Tauchen, Fluten, Gießen, Walzen auf beliebige, gegebenenfalls bereits vorbehandelte Untergründe wie z.B. Metall, Holz, Glas, Keramik, Stein, Beton, Kunststoffe, Textilien, Leder, Pappe oder Papier aufgetragen werden.

In den nachfolgenden Beispielen beziehen sich alle Prozentzahlen und -teile, falls nicht anders vermerkt, auf das Gewicht.

## Beispiele

I. Allgemeine Herstellungsvorschrift für die Anhydridgruppen enthaltenden Copolymerisate A).

In einem 5-l-Reaktionsgefäß mit Rühr-, Kühl- und Heizvorrichtungen wird Teil I vorgelegt und auf Reaktionstemperatur aufgeheizt. Dann werden parallel Teil II (Zugabe über einen Zeitraum von insgesamt 2,5 Stunden) und Teil III (Zugabe über einen Zeitraum von insgesamt 3 Stunden) zudosiert. Anschließend wird 2 Stunden bei der Reaktionstemperatur nachgerührt.

Die Reaktionstemperatur und die Zusammensetzung der Teile I bis III sind in Tabelle 1, zusammen mit den Kenndaten des erhaltenen Copolymerisates aufgeführt.

Tabelle 1 (Mengenangaben in g)

| Copolymerisat | $A_1$ |
|---|---|
| Teil I | |
| Methoxypropylacetat | 1891 |
| Teil II | |
| Butylacrylat | 563 |
| Styrol | 1013 |
| Maleinsäureanhydrid | 235 |
| Glycidylmethacrylat | 65 |
| Teil III | |
| tert.-Butylperoctoat (70 %ig) | 233 |
| Reaktionstemperatur (°C) | 145 |
| Festgehalt (%) | 50,5 |
| Anhydridgehalt der Festkörper ($C_4H_2O_3$, %) | 11,50 |

II Herstellverfahren für die bicyclische Amidacetale bzw. bicyclische Amidaminale enthaltenden Komponenten B).

II.1 Herstellung der bicyclischen Amidacetale

II.1.1 Monofunktionelle Oxazoline als Ausgangsstoffe

Alle Oxazoline werden durch Reaktion von einer Carbonsäure bzw. ihres Anhydrids mit dem entsprechenden Amin durch Erhitzen unter Rückfluß in Toluol bzw. Xylol unter azeotroper Entfernung des Reaktionswasser[1)] 1 oder in Substanz durch Destillation des Oxazolin-Wasser-Gemisches in eine etherbeschickte Vorlage[2)] 2hergestellt. Die Rohprodukte werden durch Destillation gereinigt.

1) H.L. Wehrmeister, J. Org. Chem., 26, 3821 (1961)

2) L.-F. Tietze u. Th. Eicher, reaktionen und Synthesen im organisch-chemischen Praktikum, Georg Thieme Verlag Stuttgart, New York 1981

Oxazoline

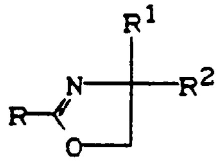

| Produkt | R | $R^1$ | $R^2$ |
|---|---|---|---|
| $b_1$ | H | $CH_3$ | $CH_3$ |
| $b_2$ | H | $CH_3$ | $CH_2OH$ |
| $b_3$ | $C_2H_5$ | H | H |
| $b_4$ | $C_2H_5$ | $CH_3$ | $CH_2OH$ |

II.1.2 Difunktionelle Oxazoline als Ausgangsstoffe

Difunktionelle Oxazoline werden durch Umsetzung von zwei Äquivalenten Monooxazolinen mit einem Äquivalent eines Diisocyanates hergestellt.

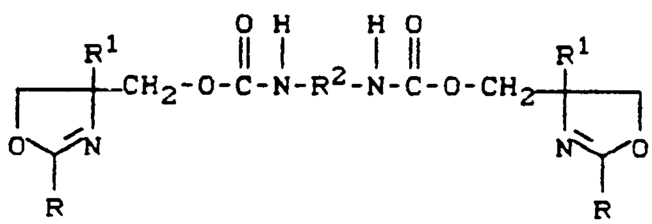

| Produkt | R | $R^1$ | $R^2$ |
|---|---|---|---|
| $b_5$ | H | $CH_3$ | $-(CH_2)_6-$ |
| $b_6$ | $C_2H_5$ | $CH_3$ | 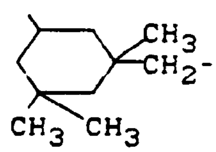 |

II.1.3 Bicyclische Amidacetale enthaltende Komponenten B)

Vernetzer B1

Hergestellt durch Erhitzen von 99 g $b_3$, 88 g Ethylencarbonat und 0,4 g Lithiumchlorid für 12 Stunden auf 150°C. Nach Destillation farblose Flüssigkeit.

Vernetzer B2

Analog B1 aus 99 g $b_3$, 120 g Styroloxid und 0,4 g Lithiumchlorid, für 6 Stunden auf 150°C. Nach Destillation farblose Flüssigkeit.

Vernetzer B3

Analog B1 aus 99 g $b_3$, 150 g Phenylglycidylether und 0,4 g Lithiumchlorid. 6 Stunden 150°C. Nach Destillation farblose Kristalle.

Vernetzer B4

Analog B1 aus 99 g $b_3$, 186 g 2-Ethylhexylglycidylether und 0,4 g Lithiumchlorid. 6 Stunden 150°C. Nach Destillation farblose Flüssigkeit.

Vernetzer B5

Analog B1 aus 99 g $b_3$, 74 g Glycidyl und 0,4 g Lithiumchlorid. 8 Stunden 150°C. Nach Verdünnen auf 80 % mit N-Methylpyrrolidon orangegelbe viskose Flüssigkeit.

Vernetzer B6

Analog B1 aus 99 g $b_1$, 120 g Styroloxid und 0,4 g Lithiumchlorid. 6 Stunden 120°C. Nach Destillation farblose Flüssigkeit.

Vernetzer B7

Analog B1 aus 99 g $b_3$, 108 g Neopentylglykoldiglycidylether und 0,4 g Lithiumchlorid. 8 Stunden 150°C. Nach Verdünnen mit Toluol auf 80 % gelbe viskose Flüssigkeit.

Vernetzer B8

Analog B1 aus 200 g $b_5$, 120 g Styroloxid und 0,4 g Lithiumchlorid. 6 Stunden 150°C. Nach Verdünnen mit N-Methylpyrrolidon auf 70 % orangegelbe viskose Flüssigkeit.

Vernetzer B9

Analog B1 aus 127 g $b_6$, 93 g 2-Ethylhexylglycidylether und 0,2 g Lithiumchlorid. 6 Stunden 150°C. Nach Verdünnen mit Butylactat auf 80 % gelbe viskose Flüssigkeit.

II.2 Herstellung der bicyclischen Amidaminale

Vernetzer B10

Durch Umsetzung von 528 g 1-Amino-3-methylaminopropan und 360 g Essigsäure in 99 g Toluol erhält man nach Abspaltung des Reaktionswassers (Theorie: 216 g; gefunden 212,5 g) bei 110 bis 130°C eine Tetrahydropyrimidinvorstufe, die nach Destillation in etwa 90 %iger Ausbeute als klare, farblose Flüssigkeit vorliegt.

56 g dieser Tetrahydropyrimidinvorstufe werden in 66,7 g Methoxypropylacetat mit 44 g Ethylencarbonat in Anwesenheit von 1 g LiCl umgesetzt. Nach beendeter $CO_2$-Abspaltung wird das Reaktionsgemisch destilliert und man isoliert ein schwach gelb gefärbtes Produkt, das bicyclische Amidaminal B10.

Vernetzer B11

112 g Tetrahydropyrimidinvorstufe aus B10 werden in 200 g Butylacetat mit 87 g Ethylenglykoldiglycidylether bei 120 bis 130°C für 5 Stunden zur Reaktion gebracht. Nach Zugabe von Aktivkohle wird noch 1 Stunde gerührt, unter $N_2$-Atmosphäre abfiltriert und eine etwa 50 %ige, gelb gefärbte Lösung des difunktionellen bicyclischen Amidaminals B11 erhalten.

Vernetzer B12

572 g Dimerfettsäure (Empol® 1022, Unichema) und 176 g 1-Amino-3-methylaminopropan werden in 187 g Toluol in Anwesenheit von 0,75 g Katalysator (Dibutylzinnoxid) solange erhitzt, bis die Wasserabspaltung beendet ist. Nach destillativer Abtrennung des Lösungsmittels und nicht umgesetzten Amins erhält man ein Bistetrahydropyrimidin als gelbes Öl. 75 g dieser Vorstufe werden in 63 g Solvent Naphtha gelöst, mit 1 g Lithiumchlorid versehen und dann mit 24 g Styroloxid bei 140°C zur Reaktion gebracht. Nach beendeter Reaktion und Zugabe von Aktivkohle wird die Reaktionslösung heiß unter $N_2$-Atmosphäre abfiltriert und dann mit Methylethylketon auf 40 % Festgehalt verdünnt. Man erhält so den difunktionellen bicyclischen Amidaminalvernetzer B12.

Vernetzer B13

Zunächst werden 624 g 2-(2-Aminoethylamino)-ethanol und 360 g Essigsäure in 96 g Toluol, in Anwesenheit von 1 g Katalysator auf Rückflußtemperatur erhitzt, bis alles Wasser abgespalten ist. Nach Destillation erhält man ein hydroxylfunktionelles Dihydroimidazol als farbloses, kristallines Produkt.

51,5 g dieser Vorstufe werden in 29,3 g Methoxypropylacetat bei 80°C mit 31,9 g Hexamethylendiisocyanat zu einem urethangruppenhaltigen Bis-dihydroimidazol umgesetzt.

Nach Zugabe von 28,0 g Epoxybutan und 1 g Lithiumchlorid wird die Reaktionsmischung für 6 Stunden auf 120°C erhitzt, mit Methylethylketon auf FK 40 % verdünnt und nach Reinigung mit Aktivkohle filtriert. Man erhält das difunktionelle bicyclische Amidaminal B13.

II.3 Herstellung von Vernetzern, die neben bicyclischen Amidaminalen bzw. Amidacetalen auch andere reaktive Aminogruppen in blockierter Form enthalten

Vernetzer B14

25,6 g des bei der Herstellung des Vernetzers B13 beschriebenen hydroxylfunktionellen Dihydroimidazols werden mit 43 g eines Oxazolans aus Diethanolamin und 2-Ethylhexanal sowie mit 32,9 g Hexamethylendiisocyanat umgesetzt. Nach Verdünnen mit Methoxypropylacetat erhält man eine hellgelbe Lösung eines Produktes, das im statistischen Mittel je eine Dihydroimidazol- und eine Oxazolangruppe enthält. Durch Umsetzung dieses Produktes mit 22 g Ethylencarbonat erhält man nach beendeter $CO_2$-Abspaltung den Vernetzer B14, der Oxazolan- und bicyclische Amidaminalstrukturen aufweist, als etwa 50 %ige Lösung.

Vernetzer B15

25,6 g des bei der Herstellung von Vernetzer B13 beschriebenen hydroxylfunktionellen Dihydroimidazols und 28,5 g eines Hexahydropyrimidins aus 1-Amino-3-methylaminopropan und Isobutyraldehyd werden in 87 g Methoxypropylacetat mit 32,9 g Hexamethylendiisocyanat umgesetzt. Anschließend wird die Dihydroimidazolstruktur durch Umsetzung mit 22 g Ethylencarbonat in eine bicyclisches Amidaminal überführt. Man erhält so den Vernetzer B15, der im statistischen Mittel je eine Hexahydropyrimidin- und eine bicyclische Amidaminalstruktur enthält. Nach Verdünnen mit 43,5 g Aceton erhält man eine etwa 40 %ige Lösung von B15.

III. Herstellung einer Bindemittelkombination

Die Anhydridgruppen enthaltende Komponente $A_1$) und die Komponente $B_2$) werden bei Raumtemperatur miteinander vermischt und durch Zugabe eines organischen Lösungsmittels auf eine verarbeitungsfähige Viskosität eingestellt. Der Film wird mit einem Filmzieher auf ein Prüfblech aufgezogen, wobei die Naßfilmstärke 180 μm beträgt. Nach pysikalischer Antrocknung wird eine zweite Lackschicht auf die erste unter gleichen Bedingungen appliziert. Der bei Raumtemperatur aufgezogene Film war nach spätestens 60 Minuten klebfrei durchgetrocknet. Nach Alterung d.h. ca. 24 Stunden Trocknung bei Raumtemperatur erhält man einen klaren vernetzten Film mit guten filmoptischen und mechanischen Werten.

Die angesetzten Lackmischungen weisen durchweg eine Standzeit von mehreren Stunden auf.

In der folgenden Tabelle werden die Zusammensetzungen der Bindemittelkombinationen und die Lösungsmittelfestigkeit als Grad der Vernetzung aufgeführt.

Die Lösungsmittelfestigkeit wird durch einen Wischtest mit einem Methylisobutylketon (MIBK)-getränkten Wattebausch geprüft. Angegeben wird die Anzahl der Doppelhübe, nach denen der Film ohne sichtbare Veränderung bleibt. Mehr als 100 Doppelhübe pro Film wurden nicht durchgeführt.

| | |
|---|---|
| Komponente A (g) | 20,0 $A_1$ |
| Komponente B (g) | 3,1 $B_2$ |
| Butylacetat (g) | 4,0 |
| Standzeit | 4 h |
| Aussehen des Films | klar, glänzend |
| MIBK-Wischtest nach 24 h Raumtemperatur, Anzahl der Doppelhübe | >100 |

Molverhältnis
Anhydrid: bicyclisches Amidacetal bzw. Amidaminal 1:1

## Patentansprüche

1. Verfahren zur Herstellung von feuchtigkeitshärtenden Bindemittelkompositionen durch Abmischung und gegebenenfalls Umsetzung unter Feuchtigkeitsausschluß von
A) 30 bis 99 Gew.-Teilen mindestens einer Verbindung, welche mindestens zwei intramolekulare Carbonsäureanhydridgruppen enthält,
mit
B) 1 bis 70 Gew.-Teilen an organischen Verbindungen mit blockierten Aminogruppen,
gegebenenfalls unter Mitverwendung von Lösungsmitteln und/oder sonstigen aus der Lacktechnologie bekannten Hilfs- und Zusatzstoffen, dadurch gekennzeichnet, daß man
als Verbindungen A) Copolymerisate eines als Gewichtsmittel bestimmten Molekulargewichts von 1500 bis 75000 verwendet, die ein Epoxid-Äquivalentgewicht von 568 bis 14200 und ein Anhydrid-Äquivalentgewicht von 392 bis 9800 aufweisen und durch radikalisch initiierte Copolymerisation von
a) 1 bis 20 Gew.-Teilen Maleinsäureanhydrid,
b) 1 bis 20 Gew.-Teilen copolymerisierbaren, epoxidfunktionellen Monomeren, sowie
c) 40 bis 98 Gew.-Teilen sonstigen copolymerisierbaren Monomeren der allgemeinen Formeln (I), (II), (III)

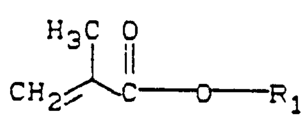 (I)

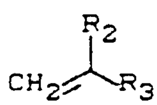 (II)

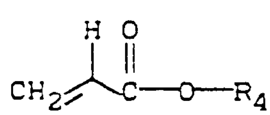 (III)

erhalten werden, wobei

$R_1$ für einen aliphatischen oder cycloaliphatischen, gegebenenfalls Sauerstoff, Schwefel oder Stickstoff als Heteroatom enthaltenden Kohlenwasserstoffrest mit 1 bis 18 Kohlenstoffatomen steht,

$R_2$ für Wasserstoff, eine Methyl- oder Ethylgruppe oder für Chlor Fluor steht,

$R_3$ für einen aliphatischen Kohlenwasserstoffrest mit 2 bis 15 Kohlenstoffatomen, einen cycloaliphatischen Kohlenwasserstoffrest mit 5 mit 10 Kohlenstoffatomen, einen araliphatischen Kohlenwasserstoffrest mit 7 bis 18 Kohlenstoffatomen, einen aromatischen Kohlenwasserstoffrest mit 6 bis 12 Kohlenstoffatomen, der ein oder mehrere Heteroatome aus der Gruppe bestehend aus Sauerstoff, Schwefel und Stickstoff in Form von Ether-, Ester-, Amid-, Urethan-, Harnstoff-, Thioester-, Thioether-, Oxiran-, Keton-, Lactam- oder Lactongruppen enthält, steht und

$R_4$ bezüglich seiner Bedeutung der für $R_1$ gemachten Definition entspricht, und

als Verbindungen B) gegebenenfalls gegenüber Säureanhydridgruppen reaktionsfähige Wasserstoffatome aufweisende, im statistischen Mittel, gegebenenfalls neben anderen blockierten Aminogruppen, pro Molekül mindestens 0,1 bicyclische Amidacetal- und/oder bicyclische Amidaminalgruppen aufweisende organische Verbindungen eines als Gewichtsmittel bestimmten Molekulargewichts von 115 bis 30000 verwendet, wobei die Mengenverhältnisse der Einzelkomponenten unter Einbeziehung der gegebenenfalls in Abwesenheit von Feuchtigkeit zwischen den Komponenten A) und B) spontan ablaufenden Additionsreaktion so gewählt werden, daß in der resultierenden Komposition auf jede bicyclische Amidacetal- und/oder bicyclische Amidaminalgruppe 0,25 bis 50 Anhydridgruppen entfallen.

2. Verfahren gemäß Anspruch 1, dadurch gekennzeichnet, daß die Komponente B) aus Verbindungen besteht, die (im statistischen Mittel) 0,5 bis 4 Struktureinheiten der allgemeinen Formel

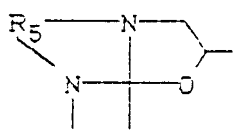

sowie gegebenenfalls (i) gegenüber Säureanhydridgruppen reaktionsfähige Gruppen ausgewählt aus der Gruppe bestehend aus Hydroxyl-, primären und sekundären Aminogruppen und/oder gegebenenfalls (ii) gegenüber Säureanhydridgruppen inerte, reversibel blockierte Aminogruppen ausgewählt aus der Gruppe bestehend aus Oxazolan-, Aldimin-, Ketimin-, Oxazan-, Hexahydropyrimidin-, Tetrahydroimidazolgruppen enthalten,
wobei,

$R_5$ für einen zweiwertigen aliphatischen Kohlenwasserstoffrest mit 2 bis 10 Kohlenstoffatomen steht, mit der Maßgabe, daß zwischen den beiden Heteroatomen 2 oder 3 Kohlenstoffatome angeordnet sind, wobei dieser Kohlenwasserstoffrest auch funktionelle Gruppen, insbesondere Hydroxylgruppen aufweisen kann.

3. Verfahren gemäß Anspruch 1 und 2, dadurch gekennzeichnet, daß man als Hilfs- und Zusatzstoffe, gegebenenfalls neben weiteren Hilfs- und Zusatzstoffen, weitere, gegebenenfalls gegenüber Säureanhydridgruppen reaktionsfähige Hydroxyl- oder Aminogruppen aufweisende bicyclische Amidacetalgruppen- und bicyclische Amidaminalgruppen-freie Vernetzungsmittel mit reversibel blockierten Aminogruppen, ausgewählt aus der Gruppe bestehend aus Oxazan-, Oxazolan-, Aldimin-, Ketimin-, Hexahydro- pyrimidin-, Tetrahydroimidazolgruppen verwendet.

4. Gemäß Anspruch 1 bis 3 erhältliche Bindemittelkombinationen.

5. Verwendung der gemäß Anspruch 1 bis 3 erhältlichen Bindemittelkombinationen als unter dem Einfluß von Feuchtigkeit aushärtbaren Lacke oder Beschichtungsmassen oder zur Herstellung derartiger Lacke oder Beschichtungsmassen.

## Claims

1. A process for the production of moisture-curing binder compositions by mixing and, optionally, reaction in

the absence of moisture of

A) 30 to 99 parts by weight of at least one compound containing at least two intramolecular carboxylic anhydride groups

with

B) 1 to 70 parts by weight of organic compounds containing blocked amino groups,

optionally using solvents and/or other auxiliaries and additives known from paint technology,

characterized in that the compounds A) used are copolymers which have a weight average molecular weight of 1,500 to 75,000, an epoxide equivalent weight of 568 to 14,200 and an anhydride equivalent weight of 392 to 9,800 and which have been obtained by radical-initiated copolymerization of

a) 1 to 20 parts by weight maleic anhydride,

b) 1 to 20 parts by weight copolymerizable epoxyfunctional monomers and

c) 40 to 98 parts by weight other copolymerizable monomers corresponding to general formulae (I), (II), (III)

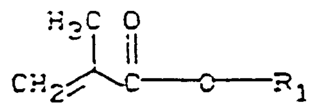 (I)

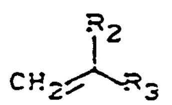 (II)

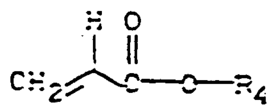 (III)

in which

$R_1$ is an aliphatic or cycloaliphatic $C_{1-18}$ hydrocarbon radical optionally bearing oxygen, sulfur or nitrogen as hetero atom,

$R_2$ is hydrogen, a methyl or ethyl group or chlorine or fluorine,

$R_3$ is an aliphatic $C_{2-15}$ hydrocarbon radical, a cycloaliphatic $C_{5-10}$ hydrocarbon radical, an araliphatic $C_{7-18}$ hydrocarbon radical, an aromatic $C_{6-12}$ hydrocarbon radical containing one or more hetero atoms from the group consisting of oxygen, sulfur and nitrogen in the form of ether, ester, amide, urethane, urea, thioester, thioether, oxirane, ketone, lactam or lactone groups and

$R_4$ corresponds in its meaning to the definition given for $R_1$,

and the compounds B) used are organic compounds optionally containing hydrogen atoms reactive to anhydride groups and bearing on a statistical average at least 0.1 bicyclic amidoacetal groups and/or bicyclic amidoaminal groups per molecule, optionally in addition to other blocked amino groups, and having a weight average molecular weight of 115 to 30,000, the quantities in which the individual components are used being selected - taking into account any spontaneous addition reactions taking place between components A) and B) in the absence of moisture - so that, for every bicyclic amidoacetal group and/or bicyclic amidoaminal groups, there are 0.25 to 50 anhydride groups in the resulting composition.

**2.** A process as claimed in claim 1, characterized in that component B) consists of compounds which (on a statistical average) contain 0.5 to 4 structural units corresponding to the general formula

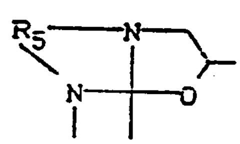

in which

$R_5$ is a divalent aliphatic hydrocarbon radical containing 2 to 10 carbon atoms, with the proviso that 2 or 3 carbon atoms are arranged between the two hetero atoms; this hydrocarbon radical may also contain

functional groups, more particularly hydroxyl groups,

and, optionally, (i) anhydride-reactive groups selected from the group consisting of hydroxyl, primary and secondary amino groups and/or optionally (ii) anhydride-inert reversibly blocked amino groups selected from the group consisting of oxazolane, aldimine, ketimine, oxazane, hexahydropyrimidine, tetrahydroimidazole groups,

3. A process as claimed in claims 1 and 2, characterized in that other crosslinking agents which contain reversibly blocked amino groups selected from the group consisting of oxazane, oxazolane, aldimine, ketimine, hexahydropyrimidine, tetrahydroimidazole groups and, optionally, anhydride-reactive hydroxyl or amino groups and which are free from bicyclic amidoacetal groups and bicyclic amidoaminal groups are used as auxiliaries and additives, optionally in addition to other auxiliaries and additives.

4. Binder combinations obtainable by the process claimed in claims 1 to 3.

5. The use of the binder combinations obtainable by the process claimed in claims 1 to 3 as moisture-curing lacquers or coating compounds or for the production of such lacquers or coating compounds.

## Revendications

1. Procédé de production de combinaisons de liants durcissant à l'humidité par mélange et, le cas échéant, réaction, à l'abri de l'humidité,

A) de 30 à 99 parties en poids d'au moins un composé qui contient au moins deux groupes anhydride d'acide carboxylique intramoléculaires,

avec

B) 1 à 70 parties en poids de composés organiques porteurs de groupes amino protégés le cas échéant avec utilisation simultanée de solvants et/ou d'autres substances auxiliaires et additifs connus dans la technologie des peintures, caractérisé en ce qu'on utilise comme composés A) des copolymérisats de poids moléculaire égal à 1500-75 000, déterminé comme moyenne pondérale, qui présentent un poids équivalent d'époxyde de 568 à 14 200 et un poids équivalent d'anhydride de 392 à 9800 et que l'on obtient par copolymérisation, déclenchée par des radicaux,

a) de 1 à 20 parties en poids d'anhydride d'acide maléique,

b) de 1 à 20 parties en poids de monomères copolymérisables à fonctionnalité époxyde, ainsi que

c) de 40 à 98 parties en poids d'autres monomères copolymérisables de formules générales (I), (II), (III)

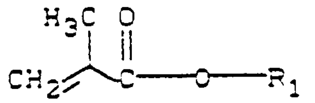

(I)

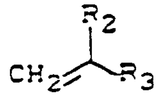

(II)

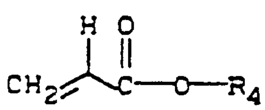

(III)

formules dans lesquelles

$R_1$ représente un reste d'hydrocarbure aliphatique ou cycloaliphatique ayant 1 à 18 atomes de carbone, contenant éventuellement de l'oxygène, du soufre ou de l'azote comme hétéro-atome,

$R_2$ représente l'hydrogène, un groupe méthyle ou éthyle ou du chlore ou du fluor,

$R_3$ est un reste d'hydrocarbure aliphatique ayant 2 à 15 atomes de carbone, un reste d'hydrocarbure cycloaliphatique ayant 5 à 10 atomes de carbone, un reste d'hydrocarbure araliphatique ayant 7 à 18 atomes de carbone, un reste d'hydrocarbure aromatique ayant 6 à 12 atomes de carbone, qui contient un ou plusieurs hétéro-atomes du groupe comprenant l'oxygène, le soufre et l'azote sous forme de groupes éther, ester, amide, uréthanne, urée, thioester, thioéther, oxiranne, cétone, lactame ou lactone, et

$R_4$ a une définition qui correspond à celle qui a été donnée pour $R_1$, et

on utilise comme composés B) des composés organiques de poids moléculaire déterminé d'après la moyenne en poids, de 115 à 30 000, présentant des atomes d'hydrogène aptes à réagir vis-à-vis de groupes anhydride d'acide, et présentant en moyenne statistique, par molécule, le cas échéant à côté d'autres groupes amino protégés, au moins 0,1 groupe amidacétal bicyclique et/ou amidaminal bicyclique, les rapports quantitatifs des composants individuels étant choisis en tenant compte de la réaction d'addition s'effectuant le cas échéant spontanément en l'absence d'humidité entre les composants A) et B) de manière qu'il y ait dans la composition résultante 0,25 à 50 groupes anhydride pour chaque groupe amidacétal bicyclique et/ou amidaminal bicyclique.

2. Procédé suivant la revendication 1, caractérisé en ce que le composant B) est constitué de composés qui contiennent (en moyenne statistique) 0,5 à 4 motifs structuraux de formule générale

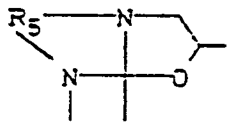

ainsi que le cas échéant (i) des groupes réactifs vis-à-vis de groupes anhydride d'acide choisis entre des groupes hydroxyle, amino primaire et amino secondaire et/ou (ii) des groupes amino protégés de façon réversible, inertes vis-à-vis de groupes anhydride d'acide, choisis entre des groupes oxazolane, aldimine, cétimine, oxazane, hexahydropyrimidine, tétrahydroimidazole,

$R_5$ représentant un reste hydrocarboné aliphatique divalent ayant 2 à 10 atomes de carbone, sous réserve que 2 ou 3 atomes de carbone soient disposés entre les deux hétéro-atomes, ce reste hydrocarboné pouvant présenter aussi des groupes fonctionnels, notamment des groupes hydroxyle.

3. Procédé suivant les revendications 1 et 2, caractérisé en ce qu'on utilise comme substances auxiliaires et additifs, le cas échéant à côté d'autres substances auxiliaires et d'autres additifs, d'autres agents de réticulation dépourvus de groupes amidacétal bicycliques et de groupes amidaminal bicycliques, présentant le cas échéant des groupes hydroxyle ou amino aptes à réagir vis-à-vis de groupes anhydride d'acide et portant des groupes amino protégés de façon réversible, choisis entre des groupes oxazane, oxazolane, aldimine, cétimine, hexahydropyrimidine, tétrahydroimidazole.

4. Combinaisons de liants pouvant être obtenues conformément aux revendications 1 à 3.

5. Utilisation des combinaisons de liants pouvant être obtenues conformément aux revendications 1 à 3 comme peintures ou enduits durcissant sous l'influence de l'humidité ou pour la production de tels peintures ou enduits.